# FASCICULE DE BREVET EUROPEEN

(11) **EP 0 692 920 B1**
(45) Date de publication et mention de la délivrance du brevet: **02.01.2002**
(21) Numéro de dépôt: 95401664.8
(22) Date de dépôt: 11.07.1995
(51) Int. Cl.: H04Q 7/38

(54) **Sélection de cellule dans un réseau radiotéléphonique cellulaire multicouche**
Zellenauswahl in einem mehrschichtigen zellularen Funktelefonnetz
Cell selection in multi-layered cellular radio-telephone network

(30) Priorité: 13.07.1994 FR 9408834
(43) Date de publication de la demande: 17.01.1996
(73) Titulaire: FRANCE TELECOM, 75015 Paris (FR)
(72) Inventeur: Tabbane, Sami, F-75014 Paris (FR); Moreau, Christophe, F-92320 Chatillon (FR)
(74) Mandataire: Cabinet Martinet & Lapoux

(56) Documents cités:
- EP-A- 0 589 278
- WO-A-92/02104
- THE THIRD IEEE INTERNATIONAL SYMPOSIUM ON PERSONAL, INDOOR AND MOBILE RADIO COMMUNICATIONS, BOSTON, 19 Octobre 1992 NEW-YORK (US), pages 169-173, P A RAMSDALE ET AL 'TECHNIQUES FOR CELLULAR NETWORKS INCORPORATING MICROCELLS'
- 1994 IEEE 44TH VEHICULAR TECHNOLOGY CONFERENCE, STOCKHOLM, vol. 1, 10 Juin 1994 NEW-YORK (US), pages 91-95, CHI W SUNG ET AL 'User Speed Estimation and Dynamic Channel Allocation in Hierarchical Cellular System'

## Description

La présente invention concerne un procédé de sélection et resélection de cellule d'accès par une station mobile à l'état de veille dans un réseau radiotéléphonique cellulaire multicouche.

Dans un réseau cellulaire connu, qu'il soit monocouche ou multicouche, une station mobile à l'état de veille sélectionne et resélectionne en permanence la cellule d'accès par l'intermédiaire de laquelle la station mobile est susceptible de recevoir ou d'établir une communication radiotéléphonique.

Dans le cas d'un réseau cellulaire multicouche comprenant plusieurs couches ou sous-réseaux de cellules, les tailles des cellules des couches respectives sont différentes. Ainsi, une couche de cellules de petite taille est destinée à des stations mobiles de vitesse faible ou nulle, et une couche de cellules de grande taille est destinée à des stations mobiles de vitesse plus importante.

Si une station mobile donnée ne peut accéder qu'à une seule couche prédéterminée, la taille des cellules de cette couche n'est pas toujours appropriée à la vitesse de déplacement de la station mobile. Cela entraîne une surcharge des cellules de grande taille provoquée par des stations mobiles circulant momentanément avec une vitesse faible, et des coupures de communication pour des stations mobiles circulant momentanément à grande vitesse connectées à des cellules de petite taille.

Il est donc préférable que la station mobile puisse accéder à plusieurs couches du réseau. le choix de la couche est alors réalisé par l'usager de la station mobile. Ce choix, laissé au libre arbitre de l'usager, n'est pas nécessairement le plus approprié et l'usager a tendance à choisir toujours la même couche.

Selon la EP-A-526436, la station mobile peut changer de couche en cours de communication par un transfert automatique intercellulaire. Le changement de couche en cours de communication est fondé sur une estimation de la vitesse de déplacement de la station mobile, qui nécessite plusieurs secondes et entraîne des coupures de communication. En outre, si les transferts automatiques intercellulaires réalisés dans une même couche de cellules sont nécessaires lors du déplacement de la station mobile, les transferts automatiques intercellulaires entre cellules de couches différentes entraînent des coûts d'exploitation supplémentaires.

La présente invention vise à remédier aux inconvénients précités en fournissant un procédé de sélection et resélection de cellule d'accès par une station mobile à l'état de veille dans un réseau téléphonique cellulaire multicouche qui permet à une station mobile de sélectionner une cellule de la taille la plus appropriée à la vitesse de déplacement de la station mobile, par conséquent sans risque de coupure de radiocommunication.

A cette fin, un procédé de sélection et resélection de cellule d'accès par une station mobile dans un réseau radiotéléphonique cellulaire avec plusieurs couches incluant chacune plusieurs cellules d'accès respectives comprend pendant un état de veille de la station mobile et après une sélection d'une cellule d'accès par la station mobile, les étapes de :
- identifier une couche dans laquelle est incluse la cellule d'accès sélectionnée en une couche identifiée,
- resélectionner des cellules d'accès qui sont incluses dans la couche identifiée pendant une durée prédéterminée associée à ladite cellule sélectionnée en des cellules d'accès resélectionnées,
- cumuler le nombre de cellules d'accès resélectionnées dans la couche identifiée pendant ladite durée prédéterminée,
- comparer le nombre cumulé de cellules d'accès resélectionnées avec un premier seuil prédéterminé associé à ladite cellule sélectionnée et un second seuil prédéterminé associé à ladite cellule sélectionnée et inférieur au premier seuil prédéterminé,
- réitérer les étapes de resélectionner, cumuler et comparer lorsque le nombre cumulé est compris entre lesdits premier et second seuils prédéterminés,
- changer la couche identifiée en une première couche sélectionnée du réseau ayant des cellules couvrant des cellules de la couche identifiée lorsque le nombre cumulé est supérieur au premier seuil prédéterminé, et en une seconde couche sélectionnée du réseau ayant des cellules couvertes par les cellules de la couche identifiée lorsque le nombre cumulé est inférieur au second seuil prédéterminé, et
- sélectionner une cellule incluse dans l'une sélectionnée des première et seconde couches en tant que cellule d'accès sélectionnée et réitérer les étapes précédentes à partir de l'étape d'identifier.

La station mobile sélectionne ainsi la couche dont les cellules ont la taille la plus appropriée à la vitesse de déplacement de la station mobile.

L'étape d'identifier la couche comprend la détection d'un identificateur de la couche dans laquelle est incluse la cellule d'accès sélectionnée, ledit identificateur étant émis de préférence périodiquement par l'une des stations de base du réseau rayonnant sur la cellule d'accès sélectionnée.

En réponse à l'identificateur détecté, la station mobile détecte la durée prédéterminée qui est émise par ladite station de base du réseau rayonnant sur la cellule d'accès sélectionnée et détecte le seuil prédéterminé qui est émis par ladite station de base du réseau rayonnant sur la cellule d'accès sélectionnée.

Les durées et seuils prédéterminés peuvent être différents d'une cellule à l'autre dans une même couche et sont modifiables dans les stations de base.

L'étape d'identifier succède à toute rupture de radiocommunication entre ladite station mobile et le réseau radiotéléphonique cellulaire.

Un établissement de radiocommunication entre ladite station mobile et le réseau radiotéléphonique cellulaire interrompt l'une en cours des étapes comprises entre l'étape d'identifier et l'étape de sélectionner.

D'autres caractéristiques et avantages de la présente invention apparaîtront plus clairement à la lecture de la description suivante de plusieurs réalisations préférées de l'invention en référence aux dessins annexés correspondants dans lesquels :
- la figure 1 est un réseau téléphonique cellulaire multicouche selon la technique antérieure ;
- la figure 2 est un champ d'information émis par les stations de base du réseau selon l'invention ;
- la figure 3 est un algorithme de la sélection et l'inscription d'une station mobile dans un réseau cellulaire, selon la technique antérieure ;
- la figure 4 est un algorithme de la sélection et resélection de cellule selon l'invention ;
- la figure 5 est un diagramme de changement entre deux couches de cellule en fonction d'un compte cumulé de cellules sélectionnées selon l'invention ; et
- la figure 6 est un diagramme de changement entre couches de cellule en fonction d'un compte cumulé de cellules sélectionnées pour un réseau à quatre couches de cellule selon l'invention.

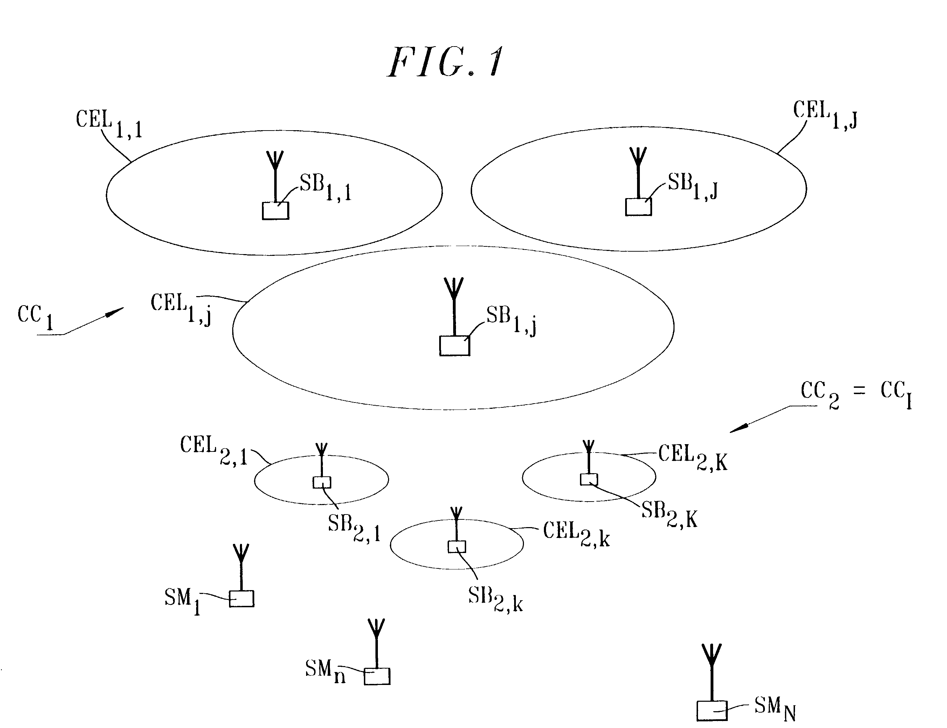

En référence à la figure 1, un réseau téléphonique cellulaire comprend I couches de cellules, dites également sous-réseaux cellulaires, CC₁ à CC_{I}, I étant un entier positif compris par exemple entre 2 et 4. Lorsque I=4, le réseau comprend alors une couche d'hypercellules pour des communications avec les bateaux et avions via satellites, une couche de grandes macrocellules pour véhicules rapides tels que trains à grande vitesse, une couche de petites macrocellules (quelques dizaines de km²) pour véhicules automobiles et piétons, et une couche de microcellules (quelques centaines de m²) pour piétons essentiellement.

Afin de ne pas surcharger la figure 1, l'entier I vaut 2.

La première couche CC₁ comprend des premières cellules, ou macrocellules CEL_{1,1} à CEL_{1,J} ayant chacune une aire de 10 à 40 km² environ. Les premières cellules CEL_{1,1} à CEL_{1,J} sont par exemple les cellules du réseau numérique cellulaire paneuropéen GSM ("Global System for Mobile Communication"). Les cellules sont souvent réunies en groupes de cellules adjacentes appelées zone de localisation. Chaque cellule CEL_{1,j} , avec j un indice entier compris entre 1 et l'entier J, est associée à un relais fixe dit station de base SB_{1,j} pour gérer des canaux radioélectriques. Parmi ceux-ci, un ou plusieurs canaux radioélectriques de signalisation sont destinés à des échanges d'informations numériques entre la station de base et des stations mobiles SM₁ à SM_{N} , avec N entier positif, et à des protocoles d'interface pour établir des communications entre le réseau téléphonique et les stations mobiles.

La couche de macrocellules CC₁ comprend en outre une infrastructure, non représentée, comportant des calculateurs, des commutateurs et des moyens de transport d'informations numériques et de signaux téléphoniques afin de mettre en oeuvre notamment des fonctions de commutation, de localisation des stations mobiles dans le réseau et d'exploitation.

La seconde couche de cellules CC₂ du réseau cellulaire comprend des secondes cellules, ou microcellules, CEL_{2,1} à CEL_{2,K} , avec K entier positif, ayant chacune une aire de quelques centaines de m² à quelques km² environ. La seconde couche de cellules forme un second sous-réseau, par exemple le réseau européen de télécommunications numériques sans fil DECT (Digital European Cordless Telecommunications). Chaque seconde cellule CEL_{2,k} , avec k un indice entier compris entre 1 et K, contient un relais fixe, dit station de base SB_{2,k} dont les fonctions sont analogues à celles de la station de base d'une macrocellule CEL_{1,j}.

La couche CC₂ , dite sous-réseau de microcellules, comprend une infrastructure de calculateurs, commutateurs et moyens de transport d'informations numériques, analogue à celle du réseau de macrocellules.

Les couches de cellules CC₁ et CC₂ sont superposées et desservent la même zone géographique.

La macrocellule CEL_{1,j} est ainsi une cellule parapluie ayant une couverture radioélectrique étendue vis à vis de plusieurs microcellules. Les macrocellules sont plus particulièrement destinées aux stations mobiles à vitesse élevée, tandis que les microcellules desservent préférentiellement les stations mobiles à vitesse faible ou nulle.

Une station mobile SMn , , avec n un entier compris entre 1 et N, inclut notamment un émetteur-récepteur radio pour établir et recevoir des radiocommunications téléphoniques de départ et d'arrivée via l'une des stations de base SB_{1,1} à SB_{1,J} ou SB_{2,1} à SB_{2,K} . Dès mise sous tension, la station mobile SMₙ sélectionne l'une des stations de base, échange des informations numériques avec la station de base sélectionnée et sélectionne un canal radioélectrique associé à la station de base sélectionnée.

Plus précisément, la station de base SB_{1,j} ou SB_{2,k} diffuse dans un canal de signalisation associé à la station de base, des informations de signalisation sur la zone de localisation et sur la cellule CEL_{1,j} ou CEL_{2,k} couverte par la station SB_{1,j} ou SB_{2,k}. Dans le cas du réseau GSM, le canal de signalisation est le canal de contrôle de diffusion BCCH (Broadcast Control CHannel) qui est multiplexé temporellement dans des multitrames de 235 ms avec trois canaux de contrôle, à savoir le canal de correction de fréquence FCCH (Frequency Correction CHannel), le canal de synchronisation SCH (Synchronisation CHannel) et le canal de contrôle commun CCCH (Common Control CHannel). Le canal BCCH diffuse quatre messages d'information système dits messages "System Information" contenant notamment des paramètres de réseau tels que la puissance maximale admise dans la cellule, le seuil d'accès à la cellule et l'identité de la zone de localisation.

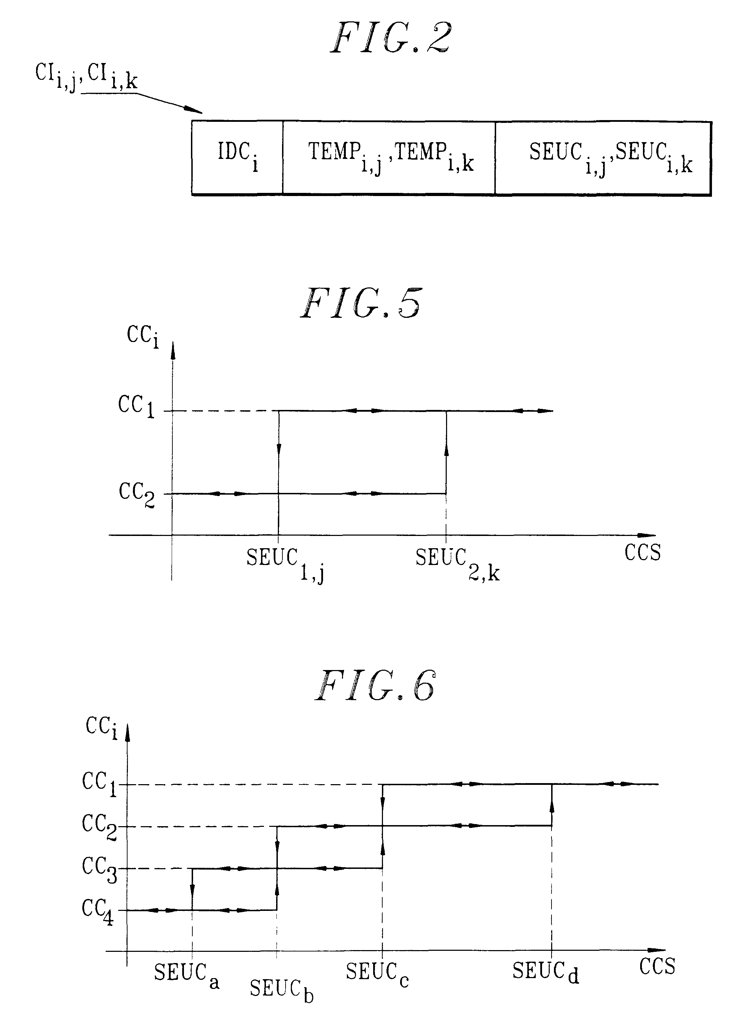

Chacun des quatre messages "System Information" est diffusé toutes les 4 x 235 = 940 ms. L'un de ces quatre messages contient un champ d'information CI_{i,j} ou CI_{i,k} spécifique à l'invention et représenté à la figure 2 où i vaut 1 ou 2, en correspondance avec la couche CC₁ ou CC₂. Le champ CI_{i,j} ou CI_{i,k} a une longueur de 10 bits et contient un identificateur de couche IDCᵢ codé avec 2 bits, une valeur de temporisation TEMP_{i,j} ou TEMP_{i,k} codée avec 5 bits et une valeur de seuil de couche SEUC_{i,j} ou SEUC_{i,k} codée avec 3 bits. Comme il sera exposé dans la suite, pour un réseau ayant au moins trois couches de cellules, le champ d'information contient deux seuils de couche et par conséquent a une longueur supérieure à 10 bits. L'identificateur de couche IDCᵢ identifie jusqu'à quatre couches différentes. La temporisation TEMP_{i,j} ou TEMP_{i,k} vaut au maximum 2⁵ = 32 secondes (dans le cas où le pas est de 1 s). Le seuil de couche SEUC_{i,j} ou SEUC_{i,k} vaut au maximum 2³ = 8 ou plus généralement varie dans des proportions de 1 à 8. Chaque station de base émet ainsi périodiquement périodiquement les informations utiles à la sélection de couche. L'identificateur de couche est propre à chaque couche ; la temporisation et le seuil de couche sont fixés pour chaque cellule et sont susceptibles d'être différents d'une cellule à l'autre dans une même couche. Le rôle des informations contenues dans le champ CI_{i,j} ou CI_{i,k} est détaillé dans la suite.

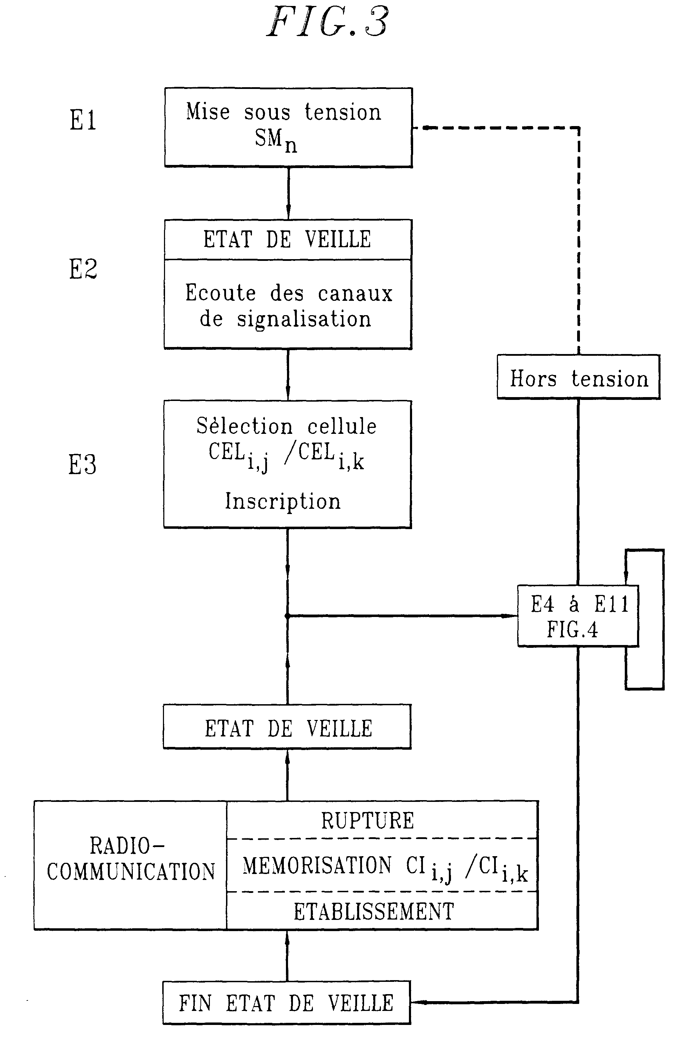

En référence à la figure 3, la sélection de cellule d'accès et l'inscription d'une station mobile quelconque SMₙ sont schématisées sous la forme de trois étapes E1 à E3. La station mobile SMₙ est mise sous tension par un usager à l'étape E1 et passe à l'état de veille. La station mobile SMₙ écoute à l'étape E2 les canaux de signalisation associés aux deux couches.

Selon une première variante, la station mobile balaie toute la bande de fréquence utilisée par les deux couches et recherche les canaux de signalisation.

Selon une seconde variante, les fréquences des canaux de signalisation des deux sous-réseaux sont mémorisées dans la station mobile et cette dernière est calée directement et cycliquement sur les canaux de signalisation.

A l'étape E3, la station mobile SMₙ sélectionne un canal de signalisation, et donc une cellule du réseau. Pour cela la station mobile calcule, par exemple comme dans le réseau GSM, un niveau moyen de signal reçu sur au moins cinq échantillons par canal répartis pendant 3 à 5 secondes. Lorsque la station mobile trouve un canal de signalisation en fonction d'un critère de sélection prédéterminé, elle se synchronise sur ce canal et y lit les informations de signalisation. Une cellule CEL_{i,j} ou CEL_{i,k} est sélectionnée. Afin de ne pas surcharger la description, on suppose que la celule sélectionnée est la cellule CEL_{i,j} . La cellule sélectionnée appartenant à l'une des deux couches de réseau, l'étape E3 comprend par conséquent implicitement la sélection d'une couche de réseau CCᵢ . En pratique, le critère de sélection prédéterminé consiste en ce que la station mobile SMₙ sélectionne la cellule dont la puissance de signal reçu est la plus élevée, ce choix étant éventuellement corrigé en fonction de la charge de la station de base SB_{i,j} de la cellule sélectionnée CEL_{i,j} . D'autres critères de sélection de couche peuvent être mis en oeuvre : par exemple l'usager de la station mobile SMn dispose d'un commutateur pour choisir l'une des couches ; ou bien dès mise sous tension, la station mobile SMₙ sélectionne la couche, ou la cellule qui a été sélectionnée avant sa mise hors tension et dont les informations ont été mémorisées à cette fin dans la station mobile.

Après sélection de la cellule, la station mobile SMₙ mémorise des données telles que les adresses de canaux d'accès, le numéro de la zone de localisation de la cellule sélectionnée. La station mobile s'inscrit dans la couche de cellules CCᵢ et signale ainsi sa localisation aux infrastructures du réseau cellulaire via la station de base couvrant la cellule sélectionnée.

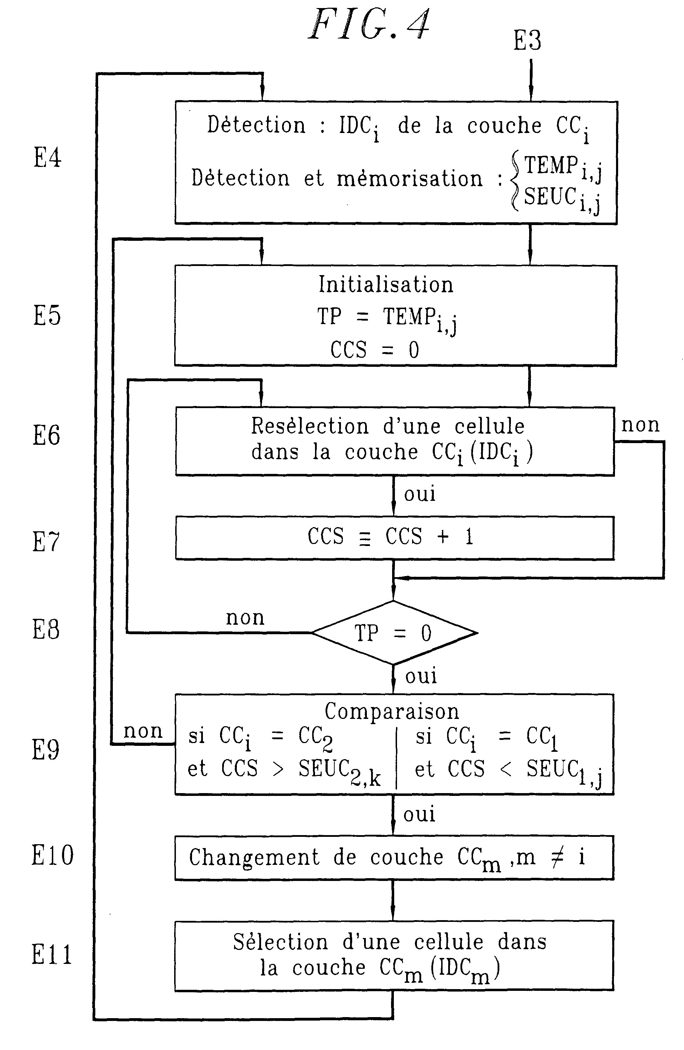

Selon la figure 4 comprenant un algorithme à huit étapes E4 à E11, la station mobile SMₙ détecte à l'étape E4 l'identificateur de couche IDCᵢ de la couche contenant la cellule sélectionnée à l'étape E3 ou à l'étape E11 comme cela apparaîtra dans la suite, la valeur de la temporisation TEMP_{i,j} et la valeur de seuil SEUC_{i,j} correspondant à la cellule sélectionnée précédemment. Ces deux dernières valeurs sont mémorisées par la station mobile. La station mobile SMₙ comprend une mémoire PROM dans laquelle sont mémorisés les identificateurs des différentes couches dans lesquelles la station mobile est susceptible de détecter des identificateurs de cellules. Ainsi l'identificateur détecté est "reconnu" par la station mobile par comparaison avec les identificateurs mémorisés. A l'étape E5, un décompteur programmable est déclenché, inclus dans la station mobile dont le décompte de périodes d'horloge préterminées représente une temporisation TP qui est initialisée à la valeur de temporisation mémorisée TEMP_{i,j}. Simultanément à l'étape E5, un compteur programmable de cellule également inclus dans la station mobile est mis à zéro afin que son compte CCS soit incrémenté à chaque nouvelle cellule sélectionnée à l'étape suivante E6.

L'étape E6 est la resélection d'une autre cellule appartenant seulement à la couche sélectionnée CCᵢ en fonction du critère de sélection utilisé à l'étape E3. La station mobile n'examine que les cellules dont les canaux de signalisation ont un champ d'information CI_{i,j} qui contient l'identificateur IDCᵢ de la couche sélectionnée précédemment CCᵢ.

A l'étape E7, le compte cumulé CCS représentant le nombre de cellules resélectionnées dans la couche CCᵢ à l'étape E6 est incrémenté d'une unité à chaque fois que la station mobile SMₙ sélectionne à l'étape E6 une nouvelle cellule différente de la cellule courante sélectionnée au cours d'un cycle précédent d'étapes E6 à E8.

L'étape E8 est un contrôle de la temporisation TP. Tant que la temporisation TP ne s'est pas écoulée, la station mobile SMₙ resélectionne des cellules dans la couche sélectionnée (étape E6) et le compte CCS cumule des unités comme précédemment (étape E7). Lorsque la temporisation TP s'est écoulée, soit TP=O, une comparaison du compte cumulé de cellule sélectionnée CCS avec le seuil SEUC_{i,j} ou SEUC_{i,k} est effectuée à l'étape E9.

L'étape de comparaison E9 diffère en fonction de la couche.

Pour la couche de microcellules CC₂, si le compte cumulé CCS des cellules resélectionnées pendant la durée TP est supérieur au seuil SEUC_{2,k} associé à la couche de la cellule sélectionnée avant l'étape E4, cela signifie que la station mobile a sélectionné un nombre trop important de microcellules, c'est-à-dire est devenue plus rapide, et qu'il est préférable de changer de couche pour sélectionner des cellules de plus grande taille, afin d'éviter trop de transferts automatiques intercellulaires au cours d'une communication à établir prochainement.

Inversement, pour la couche de macrocellules CC₁, si le compte cumulé CCS des cellules resélectionnées pendant la durée TP est inférieur au seuil SEUC_{1,j} associé à la couche de la cellule sélectionnée avant l'étape E4, cela signifie que la station mobile SMₙ s'est peu déplacée relativement à la taille des macrocellules. La couche de microcellules est alors suffisante pour cette quasi-immobilité ou lenteur de la station mobile qui ne demandera aucun ou seulement quelques transferts automatiques intercellulaires au cours d'une prochaine communication à établir. Il est préférable de changer de couche pour sélectionner des cellules de petite taille afin de libérer la couche de macrocellules CC₁ pour des stations mobiles nettement plus rapides. La figure 5 illustre les changements de couche en fonction du compte cumulé de cellule sélectionnée CCS à l'expiration de chaque temporisation TP. Les flèches dirigées vers la droite signalent une augmentation du compte CCS par unité de temps et ainsi une "accélération" de la station mobile SMₙ. Les flèches dirigées vers la gauche signalent une diminution du compte CCS par unité de temps et ainsi une "décélération" de la station mobile SMₙ.

Dans le cas d'un réseau comprenant au moins trois couches, l'étape de comparaison est identique à celle décrite pour la couche de cellules de la plus grande, respectivement petite taille. Pour une couche intermédiaire, le compte cumulé CCS est comparé à deux seuils correspondant à deux couches encadrant la couche courante sélectionnée, l'une des deux couches ayant de grandes cellules couvrant chacune des cellules de la couche courante, et l'autre des deux couches ayant des petites cellules couvertes par chacune des cellules de la couche courante. Les deux seuils définissent les limites d'une plage de variation du compte cumulé dont le franchissement impose un changement de couche. Le champ d'information émis par une station de base d'une couche intermédiaire contient les deux seuils et a donc une longueur supérieure au champ d'information précédemment décrit. A titre d'exemple, la figure 6 montre des changements de couche en fonction du compte cumulé de cellule sélectionnée CCS à l'expiration de chaque temporisation TP pour un réseau ayant quatre couches CC₁ à CC₄ définies par des seuils SEUCₐ à SEUC_{d} en supposant que toutes les valeurs de seuil dans les cellules d'une même couche sont égales. Les flèches dans la figure 6 ont les mêmes significations que dans la figure 5. Il est supposé que la relation SEUCₐ < SEUC_{b} < SEUC_{c} < SEUC_{d} est vérifiée si bien que les changements de couches sont effectués d'une couche à une autre couche "adjacente" par la taille des cellules, par exemple de la couche CC₂ à la couche CC₃. Cette progression régulière de changement de couche est adaptée à la majorité des réseaux multicouches. Cependant, il est possible, au moins localement, de choisir un ordre différent des valeurs de seuil et ainsi des changements de couche par exemple de la couche CC₁ à la couche CC₃ directement.

Les valeurs de temporisation TEMP_{i,j} et TEMP_{i,k} et les valeurs de seuil SEUC_{i,j} et SEUC_{i,k} sont a priori différentes d'une couche à l'autre, et également d'une cellule à l'autre dans une même couche, puisque toutes les cellules d'une même couche ne couvrent pas la même aire. Ces valeurs peuvent également être définies pour une zone de localisation donnée. En outre, il est possible de modifier dynamiquement les valeurs précédentes dans chaque station de base.

Lorsque l'une des conditions précédentes est vérifiée à l'étape E9, un changement de couche est effectué à l'étape E10. La station mobile SMₙ se porte alors sur la couche CCₘ , avec m différent de i, qui devient la nouvelle couche sélectionnée. La station mobile SMₙ ne considère alors que des cellules dans la couche CCₘ, c'est-à-dire des canaux de signalisation dont le champ d'information contient l'identificateur de couche IDCₘ.

Ensuite, à l'étape E11, la station mobile sélectionne une cellule dans la nouvelle couche CCₘ dernièrement sélectionnée et s'inscrit auprès de cette couche dernièrement sélectionnée, d'une manière analogue aux opérations à l'étape E3.

Après l'étape E11, la station mobile retourne à l'étape E4 pour mémoriser des données du champ d'information de la cellule sélectionnée dans la couche dernièrement sélectionnée CCₘ. La détection de l'identificateur de couche à l'étape E4 est alors facultative, puisque l'identificateur de couche a été choisi précédemment par la station mobile à l'étape E1O.

Lorsqu'à l'étape E9, la comparaison du compte cumulé CCS avec un ou deux seuils n'indique pas de franchissement de l'un des seuils et changement de couche, alors l'algorithme retourne à l'étape E5 pour remettre à zéro le compte CCS à zéro et la temporisation TP à la valeur TEMP_{i,j} et ensuite resélectionner des cellules dans la même couche CCᵢ pendant une durée suivante TP.

D'une manière générale, si l'on considère que le compte cumulé CCS pour une cellule quelconque incluse dans la couche CC₄ contenant les plus petites cellules est toujours supérieur à un second seuil égal à zéro et le compte cumulé CCS pour une cellule quelconque incluse dans la couche CC₁ contenant les plus grandes cellules est toujours inférieur à un premier seuil égal à un nombre élevé, typiquement 2³=8, voire infini, le compte CCS est alors toujours comparé à des premier et second seuils prédéterminés dépendant de l'étendue de la cellule sélectionnée CEL_{i,j} , CEL_{i,k}. Lorsque le nombre cumulé CCS est supérieur au premier seuil à l'étape E9, alors la couche courante CCᵢ est changée à l'étape E10 en une couche sélectionnée CCₘ, si elle existe, ayant des cellules couvrant chacune des cellules de la couche courante. Lorsque le nombre cumulé CCS est inférieur au second seuil à l'étape E9, alors la couche courante CCᵢ est changée à l'étape E10 en une couche sélectionnée CCₘ, si elle existe, ayant des cellules couvertes par chacune des cellules de la couche courante.

En cas de communication d'arrivée à établir par la station de base associée à la cellule sélectionnée ou de communication de départ à établir par la station mobile, la sélection et resélection de cellule est interrompue et la cellule utilisée pour la communication est la dernière sélectionnée par la station mobile SMₙ. La station SMₙ ne procèdera à des transferts automatiques intercellulaires ("handovers") qu'entre des cellules de la couche dernièrement sélectionnée pendant l'état de veille. A la fin de la communication, la station mobile retourne à l'étape E2 si elle demeure sous tension. Par conséquent, le procédé de sélection/resélection de cellules et de changement de couche selon l'invention n'est jamais exécuté pendant une radiocommunication en cours et simultanément à un transfert automatique intercellulaire. Toutefois, en cours de communication, comme indiqué en bas de la figure 3, la station mobile continue à mémoriser les champs d'informations CI_{i,j} , CI_{i,k} montrés à la figure 2 à chaque transfert automatique intercellulaire. Les informations contenues dans le dernier champ d'information seront ensuite utilisées dès le retour de la station mobile à l'état de veille pour la prochaine procédure cyclique de sélection/resélection de cellule.

## Revendications

1. Procédé de sélection et resélection de cellule d'accès (CEL_{i,j} , CEL_{i,k}) par une station mobile (SMₙ) dans un réseau radiotéléphonique cellulaire avec plusieurs couches (CC₁, CC₂) incluant chacune plusieurs cellules d'accès respectives (CEL_{1,1} à CEL_{1,J} , CEL_{2,1} à CEL_{2,K}) et les cellules d'accès comprenant des stations de base respectives, **caractérisé en ce qu'**il comprend pendant un état de veille de la station mobile et après une sélection (E3) d'une cellule d'accès par la station mobile, les étapes de :
- identifier (E4) une couche (CCᵢ) dans laquelle est incluse la cellule d'accès sélectionnée (CEL_{i,j} , CEL_{i,k}) en une couche identifiée,
- resélectionner (E6) des cellules d'accès qui sont incluses dans la couche identifiée (CCᵢ) pendant une durée prédéterminée (TEMP_{i,j} , TEMP_{i,k}) associée à ladite cellule sélectionnée en des cellules d'accès resélectionnées,
- cumuler (E7) le nombre (CCS) de cellules d'accès resélectionnées dans la couche identifiée (CCᵢ) pendant ladite durée prédéterminée (TEMP_{i,j} , TEMP_{i,k}) ,
- comparer (E9) le nombre cumulé (CCS) de cellules d'accès resélectionnées avec un premier seuil prédéterminé (SEUC_{2,k}) associé à ladite cellule sélectionnée et un second seuil prédéterminé (SEUC_{1,j}) associé à ladite cellule sélectionnée et inférieur au premier seuil prédéterminé,
- réitérer les étapes de resélectionner, cumuler et comparer (E5, E7, E9) lorsque le nombre cumulé (CCS) est compris entre lesdits premier et second seuils prédéterminés,
- changer (E10) la couche identifiée (CCᵢ) en une première couche sélectionnée (CCₘ) du réseau ayant des cellules couvrant des cellules de la couche identifiée lorsque le nombre cumulé (CCS) est supérieur au premier seuil prédéterminé, et en une seconde couche sélectionnée (CCₘ) du réseau ayant des cellules couvertes par les cellules de la couche identifiée lorsque le nombre cumulé (CCS) est inférieur au second seuil prédéterminé, et
- sélectionner (E11) une cellule incluse dans l'une sélectionnée des première et seconde couches (CCₘ) en tant que cellule d'accès sélectionnée et réitérer les étapes précédentes à partir de l'étape d'identifier (E4).

2. Procédé conforme à la revendication 1, **caractérisé en ce que** l'étape d'identifier (E4) comprend la détection d'un identificateur (IDCᵢ) de la couche (CCᵢ) dans laquelle est incluse la cellule d'accès sélectionnée, ledit identificateur étant émis de préférence périodiquement par l'une des stations de base (SB_{i,j} , SB_{i,k}) du réseau rayonnant sur la cellule d'accès sélectionnée (CEL_{i,j}, CEL_{i,k}).

3. Procédé conforme à la revendication 2, **caractérisé en ce qu'**en réponse à l'identificateur détecté (IDCᵢ), la station mobile (SMₙ) détecte la durée prédéterminée (TEMP_{i,j} , TEMP_{i,k}) qui est émise par ladite station de base (SB_{i,j}, SB_{i,k}) du réseau rayonnant sur la cellule d'accès sélectionnée (CEL_{i,j}, CEL_{i,k}).

4. Procédé conforme à la revendication 2, **caractérisé en ce qu'**en réponse à l'identificateur détecté (IDCᵢ), la station mobile (SMₙ) détecte le seuil prédéterminé (SEUC_{i,j} , SEUC_{i,k}) qui est émis par ladite station de base (SB_{i,j} , SB_{i,k}) du réseau rayonnant sur la cellule d'accès sélectionnée (CEL_{i,j} , CEL_{i,k}).

5. Procédé conforme à l'une quelconque des revendications 1 à 4, dans lequel l'étape d'identifier (E4) succède à toute rupture de radiocommunication entre ladite station mobile (SMₙ) et le réseau radiotéléphonique cellulaire.

6. Procédé conforme à l'une quelconque des revendications 1 à 5, dans lequel un établissement de radiocommunication entre ladite station mobile (SMₙ) et le réseau radiotéléphonique cellulaire interrompt l'une en cours des étapes comprises entre l'étape d'identifier et l'étape de sélectionner.

## Patentansprüche

1. Verfahren zur Auswahl und Wiederauswahl einer Zugriffszelle (CEL_{i,j}, CEL_{i,k}) durch eine Mobilstation (SMₙ) in einem zellularen Funknetz mit mehreren Schichten (CCᵢ, CC₂), die jeweils mehrere entsprechende Zugriffszellen (CEL_{1,1} bis CEL_{1,J}, CEL_{2,1} bis CEL_{2,K}) enthalten, und wobei die Zugriffszellen entsprechende Basisstationen umfassen, **dadurch gekennzeichnet, daß** es während eines Wachzustands der Mobilstation und nach einer Auswahl (E3) einer Zugriffszelle durch die Mobilstation die Schritte umfaßt:
- Identifizieren (E4) einer Schicht (CCᵢ), in der die ausgewählte Zugriffszelle (CEL_{i,j}, CEL_{i,k}) enthalten ist, als identifizierte Schicht,
- Wiederauswählen (E6) der Zugriffzellen, die in der identifizierten Schicht (CCᵢ) während einer vorbestimmten Dauer (TEMP_{i,j}, TEMP_{i,k}) enthalten sind, die mit der ausgewählten Zelle in wiederausgewählten Zugriffszellen verknüpft sind,
- Kumulieren (E7) der Zahl (CCS) von wiederausgewählten Zugriffszellen in der identifizierten Schicht (CCᵢ) während der vorbestimmten Dauer (TEMP_{i,j}, TEMP_{i,k}),
- Vergleichen (E9) der kumulierten Zahl (CCS) von wiederausgewählten Zugriffszellen mit einer ersten vorbestimmten Schwelle (SEUC_{2,k}), die mit der ausgewählten Zelle verknüpft ist, und einer zweiten vorbestimmten Schwelle (SEUC_{1,j}), die mit der ausgewählten Zelle verknüpft und kleiner als die erste vorbestimmte Schwelle ist,
- Wiederholen der Schritte des Wiederauswählens, Kumulierens und Vergleichens (E5, E7, E9), wenn die kumulierte Zahl (CCS) zwischen den ersten und zweiten vorbestimmten Schwellen enthalten ist,
- Ändern (E10) der identifizierten Schicht (CCᵢ) zu einer ausgewählten ersten Schicht (CCₘ) des Netzes, aufweisend die Zellen der identifizierten Schicht überdeckende Zellen, wenn die kumulierte Zahl (CCS) größer als die vorbestimmte erste Schwelle ist, und zu einer zweiten ausgewählten Schicht (CCₘ) des Netzes, aufweisend durch die Zellen der identifizierten Schicht überdeckte Zellen, wenn die kumulierte Zahl (CCS) kleiner als die zweite vorbestimmte Schwelle ist, und
- Auswählen (E11) einer Zelle, die in der einen ausgewählten der ersten und zweiten Schicht (CCₘ) enthalten ist, als ausgewählte Zugriffszelle, und Wiederholen der vorhergehenden Schritte ausgehend vom Schritt des Identifizierens (E4).

2. Verfahren nach Anspruch 1, **dadurch gekennzeichnet, daß** der Schritt des Identifizierens (E4) das Feststellen eines Identifizierers (IDCᵢ) der Schicht (CCᵢ) umfaßt, in der die ausgewählte Zugriffszelle enthalten ist, wobei der Identifizierer vorzugsweise periodisch durch die eine der Basisstationen (SB_{i,j}, SB_{i,k}) des Netzes gesendet wird, das auf die ausgewählte Zugriffszelle (CEL_{i,j}, CEL_{i,k}) ausstrahlt.

3. Verfahren nach Anspruch 2, **dadurch gekennzeichnet, daß** die Mobilstation (SMₙ) in Antwort auf den festgestellten Identifizierer (IDCᵢ) die vorbestimmte Dauer (TEMP_{i,j}, TEMP_{i,k}) feststellt, die von der Basisstation (SB_{i,j}, SB_{i,k}) des Netzes gesendet wird, das auf die ausgewählte Zugriffszelle (CEL_{i,j}, CEL_{i,k}) ausstrahlt.

4. Verfahren nach Anspruch 2, **dadurch gekennzeichnet, daß** die Mobilstation (SMₙ) in Antwort auf den festgestellten Identifizierer (IDCᵢ) die vorbestimmte Schwelle (SEUC_{i,j}, SEUC_{i,k}) feststellt, die von der Basis-station (SB_{i,j}, SB_{i,k}) des Netzes gesendet wird, das auf die ausgewählte Zugriffszelle (CEL_{i,j}, CEL_{i,k}) ausstrahlt.

5. Verfahren nach einem beliebigen der Ansprüche 1 bis 4, in dem der Schritt des Identifizierens (E4) auf jede Unterbrechung der Funkübertragung zwischen der Mobilstation (SMₙ) und dem zellularen Funknetz folgt.

6. Verfahren nach einem der beliebigen Ansprüche 1 bis 5, in dem eine Funkanlage zwischen der Mobilstation (SMₙ) und dem zellularen Funknetz das eine im Verlauf der Schritte unterbricht, die zwischen dem Schritt des Identifizierens und dem Schritt des Auswählens enthalten sind.

## Claims

1. A method of cell selection and reselection (CEL_{i,j}, CEL_{i,k}) by a mobile station (SMₙ) in a cellular radio telephone network with several layers (CC₁, CC₂) each including a plurality of respective access cells (CEL_{1,1} to CEL_{1,J}, CEL_{2,1} to CEL_{2,K}) and the access cells comprising respective base stations, **characterized in that** it comprises, when the mobile station is in a standby state and after selection (E3) of an access cell by the mobile station, the steps of:
- identifying (E4) a layer (CCᵢ) in which the selected cell (CEL_{i,j}, CEL_{i,k}) is included as an identified layer,
- reselecting (E6) access cells which are included in the identified layer (CCᵢ) during a predetermined time-delay (TEMP_{i,j}, TEMP_{i,k}) associated with said selected cell, as reselected access cells,
- cumulatively counting (E7) the number (CCS) of the reselected access cells in the identified layer (CCᵢ) during said predetermined time-delay (TEMP_{i,j}, TEMP_{i,k}),
- comparing (E9) the cumulated number (CCS) of the reselected access cells with a first predetermined threshold (SEUC_{2,k}) associated with said selected cell and a second predetermined threshold (SEUC_{i,j}) associated with said selected cell and lower than the first predetermined threshold,
- repeating the reselecting, cumulative counting and comparing steps (E5, E7, E9) if the cumulated number (CCS) lies between said first and second predetermined thresholds,
- changing (E10) the identified layer (CCᵢ) to a first selected layer (CCₘ) of the network having cells covering the cells of the identified layer if the cumulated number (CCS) is above the first predetermined threshold, and to a second selected layer (CCₘ) of the network having cells covered by the cells of the identified layer if the cumulated number (CCS) is below the second predetermined threshold, and
- selecting (E11) a cell included in selected one of the first and second layers (CCₘ) as another selected access cell, and repeating the previous steps from the identifying step (E4).

2. The method according to claim 1, **characterized in that** the identifying step (E4) includes detecting an identifier (IDCᵢ) of the layer (CCᵢ) in which the selected access cell is included, said identifier being emitted preferably periodically by one of the base stations (SB_{i,j}, SB_{i,k}) of the network transmitting to the selected access cell (CEL_{i,j}, CEL_{i,k}).

3. The method according to claim 2, **characterized in that**, in response to the detected identifier (IDCᵢ), the mobile station (SMₙ) detects the predetermined time-delay (TEMP_{i,j}, TEMP_{i,k}) that is emitted by said base station (SB_{i,j}, SB_{i,k}) of the network transmitting to the selected access cell (CEL_{i,j}, CEL_{i,k}).

4. The method according to claim 2, **characterized in that**, in response to the detected identifier (IDCᵢ), the mobile station (SMₙ) detects the first predetermined threshold (SEUC_{i,j}, SEUC_{i,k}) that is emitted by said base station (SB_{i,j}, SB_{i,k}) of the network transmitting to the selected access cell (CEL_{i,j}, CEL_{i,k}).

5. The method according to any one of the claims 1 to 4, **characterized in that** the identifying step (E4) follows any breaking off of radio call between said mobile station (SMₙ) and the cellular radio telephone network.

6. The method according to any one of the claims 1 to 5, wherein setting up a radio call between said mobile station (SMₙ) and the cellular radio telephone network interrupts current one of the steps lying between the identifying step and the selecting step.
